# EUROPEAN PATENT SPECIFICATION

(11) **EP 2 316 233 B1**
(45) Date of publication and mention of the grant of the patent: **20.05.2015**
(21) Application number: 09778002.7
(22) Date of filing: 20.08.2009
(51) Int. Cl.: H04W 36/12, H04W 8/18

(54) **METHOD FOR SUPPORTING NETWORK BASED MOBILITY FOR A MOBILE TERMINAL IN AN IMS (IP MULTIMEDIA SUBSYSTEM) ARCHITECTURE**
VERFAHREN ZUR UNTERSTÜTZUNG VON NETZBASIERTER MOBILITÄT FÜR EIN MOBILES ENDGERÄT IN EINER IMS (IP-MULTIMEDIASUBSYSTEM)-ARCHITEKTUR
PROCÉDÉ DE SUPPORT DE MOBILITÉ BASÉE SUR UN RÉSEAU POUR UN TERMINAL MOBILE DANS UNE ARCHITECTURE IMS (SOUS-SYSTÈME MULTIMÉDIA IP)

(30) Priority: 21.08.2008 EP 08014849
(43) Date of publication of application: 04.05.2011
(73) Proprietor: NEC EUROPE LTD., 69115 Heidelberg (DE)
(72) Inventor: KUNZ, Andreas, 68542 Heddesheim (DE); LAMPARTER, Bernd, 69126 Heidelberg (DE); SCHMID, Stefan, 69118 Heidelberg (DE)
(74) Representative: Patent- und Rechtsanwälte Ullrich & Naumann
(86) International application number: PCT/EP2009/006039
(87) International publication number: WO 2010/020417

(56) References cited:
- WO-A-2007/015068
- WO-A2-2007/038272
- "Digital cellular telecommunications system (Phase 2+); Universal Mobile Telecommunications System (UMTS); Handover procedures (3GPP TS 23.009 version 7.0.0 Release 7); ETSI TS 123 009" 1 March 2007 (2007-03-01), ETSI STANDARDS, LIS, SOPHIA ANTIPOLIS CEDEX, FRANCE , XP014037694 ISSN: 0000-0001 page 44, paragraph 1

## Description

The present invention relates to a method for supporting network based mobility for a mobile terminal in an IMS (IP Multimedia Subsystem) architecture, wherein said mobile terminal is connected to a femto cell or to a macro cell - source cell - and wherein a handover of an actual session of said mobile terminal is performed to another femto cell or macro cell - target cell -, wherein said femto cells and said macro cells are equipped with or are connected to an eMSC-server (Mobile Switching Center Server enhanced for IMS Centralized Services) function, and wherein said source cell's eMSC-server function hosts a source user agent and said target cell's eMSC-server function hosts a target user agent, and wherein said source user agent contacts said target user agent directly or indirectly prior to executing the actual handover, and wherein said source user agent prepares said target user agent together with the corresponding access network by exchanging handover related information.

In mobile cellular networks, a mobile terminal - in 3GPP commonly denoted as user equipment (UE) - is typically located within the coverage area of multiple macro cell base stations (BSs) at the same time. The decision, which BS shall serve the UE, depends on various factors, the most important factor being the quality of the radio channels between the UE and the BSs in question. When the radio channel between UE and serving BS deteriorates below a given threshold, a decision to hand over the UE to another BS with better radio channel quality has to be made and the handover process initiated.

In addition there is currently an interest from mobile network operators to deploy so called femto cells (also known as home base stations, home BTS, picocells, homeNBs, or femto radio base stations) which would be installed within the homes of the operators' customers (see for reference Airvana whitepaper, "Femtocells: Transforming The Indoor Experience"). Such home base stations are connected to a normal broadband internet connection, similar to a WiFi base station, but the radio interface is based on wide area cellular network standards such as WiMAX (Worldwide Interoperability for Microwave Access), UMTS (Universal Mobile Telecommunications System) or 3GPP LTE (Long Term Evolution).

In a general scenario, a UE being in a voice call is moved towards the border of the coverage area of a currently used femto cell, e.g. a femto cell with IMS capabilities, and should be handed over to a normal BS of the operator's macro network. Otherwise the call would be dropped when the coverage of the femto cell is completely lost. The standard procedure for such an inter-MSC handover relies on a direct connection between the two involved MSC (Mobile Switching Center) server functions for the signaling and for the voice transport after the handover. In the case of the femto cell the MSC server function is built-in, thus voice traffic needs to be routed from the network to the femto cell and from there to the other MSC server function. I.e. the traffic would be transported twice via the DSL (Digital Subscriber Line) connection. Additionally, an association between the MSC server function and all femto cells in its area would be necessary.

In Release 8 of 3GPP; a new type of MSC was specified, which is able to change a CS (circuit switched) voice call into an IMS call, i.e. a SIP (Session Initiation Protocol) user agent is running on the MSC-server on behalf of the user. This new type of MSC is called MSC-server enhanced for IMS Centralized Services (eMSC). Nevertheless, inter-MSC handovers are here still not solved on IMS level and instead rely on the legacy E-interface. The E-interface provides communication between two MSCs and exchanges data related to a handover between the source and target MSCs using the MAP/E protocol.

IMS femto cells are femto cells enhanced for IMS Centralization Services similar to the eMSC. However, there is no SIP/IMS-based mobility for active sessions of SIP/IMS femto cells, in particular between femto cells and macro cells as well as between eMSC-server functions, in case this mobility cannot be handled by the MAP (Mobile Application Part) protocol, for example between MSC-server functions that lack an MAP interface or MSC-server functions of different administrative domains.

The problem results from the fact that IMS Service Continuity itself just can switch the path between the two SIP user agents. However, the target eMSC-server function additionally needs to be informed to which BS to route the call. Moreover, there is no default registration of the eMSC-server function foreseen, so the transferring-out eMSC-server function (source SIP User Agent) does not have a registered point of contact in the transferred-in eMSC-server function (target SIP User Agent) where to route the call to.

WO 2007/015068 A1 discloses a method for supporting network-based mobility for a mobile terminal in mobile communications network, wherein the mobile communications network comprises a PLMN, having a plurality of network nodes, a core network anchor node, and an access point, serving as a basestation in the mobile communications network, wherein the basestation is connected over a public wide area network to the core network anchor node. In the event of a handover between the access point and another of the network nodes of the PLMN, handover information is sent between the access point and the core network anchor node over the public wide area network. More specifically, the core network node comprises an IMS-MSC (IMS-Mobile Switching Center) being adapted to establish a tunneling connection, such that, in the event of a handover, handover information is sent between the access point and the IMS-MSC over the public wide area network.

Document "Digital cellular telecommunications system (Phase 2+); Universal Mobile Telecommunications System (UMTS); Handover procedures (3 GPP TS 23.009 version7.0.0 Release 7), ETSI TS 123 009", March 1, 2007, ETSI standards contains a detailed description of the handover procedures to be used in PLMNs. The document considers Intra- and Inter-MSC handovers, as well as Intra- and Inter-3G_MSC handover/relocation procedures.

WO 2007/038272 A2 discloses a method and system for supporting a handover between a circuit-switched (CS) domain and an IMS domain to provide call continuity. The system includes a wireless transmit/receive unit (WTRU) and a wireless network. The WTRU includes a call continuity control entity for supporting call continuity between a CS domain and an IMS domain, and a media independent handover (MIH) entity configured to provide MIH services for providing information in a media independent manner.

It is therefore an object of the present invention to improve and further develop a method of the initially described type for supporting network based mobility for a mobile terminal in an IMS architecture in such a way that by employing mechanisms that are readily to implement a seamless handover between eMSC-server functions and/or femto cells is realized on IMS level.

In accordance with the invention, the aforementioned object is accomplished by a method comprising the features of claim 1. According to this claim, such a method is characterized in that said target cell's eMSC-server function, upon receiving handover request from an application server hosted in said IMS architecture or from said source cell's eMSC-server function, processes said handover request by downloading the user profile of the subscriber of said mobile terminal and registering said subscriber at IMS.

According to the invention it has first been recognized that an inter-MSC handover may be provided by applying a protocol independent message exchange between two - source and target - eMSC-server functions located in an eMSC-server and/or in a femto cell. Furthermore, it has been recognized that a seamless handover between eMSC-server functions and/or femto cells may be achieved when the source user agent contacts the target user agent directly or indirectly prior to executing the actual handover. The source user agent prepares the target user agent together with the corresponding access network by exchanging handover related information. Thus, the additional signalling to prepare the target cell's eMSC-server function hosting the user agent and the target network allows a seamless handover. Further, the target cell's eMSC-server function, upon receiving handover request from an application server or from the source cell's eMSC-server function, processes the handover request by downloading the user profile of the subscriber of the mobile terminal and registering the subscriber at IMS.

The method according to the invention can be suitably applied, for instance, in an IMS architecture. However, it is to be understood that the invention can be applied to any seamless session handover between two user agents, in particular SIP user agents, wherein at least one of the user agents is located in the network, and hence relies on additional signaling form the source to the target user agent in order to prepare the target entity prior to the actual session handover. The method according to the invention can be used for SIP/IMS-based between entities of the same access network (e.g. 3GPP eMSCs, 3GPP H(e)NBs) or for inter-access system mobility (e.g. between 2G/3G/LTE and WIMAX or WLAN). Furthermore, the method may be used for SIP/IMS-based handover between entities of the same network domain, e.g. for load-balancing reasons or as a failover mechanism. Consequently, when the invention is described with respect to IMS or SIP in the following, this reference is to be understood as an exemplary reference only, and it is to be expressly pointed out that it is in no way intended to limit the invention in any way.

In a preferred embodiment the handover request may include information regarding the access network of the target cell. The handover request provides essential access network information to the target cell's eMSC-server function to allow the target entity to setup the access network resources (e.g. radio and access bearers). The access network related information of the target cell may include information regarding, for example, but not limited to, the cell ID, the signal strength, the RAT (Radio Access Technology) type, the SSID (Service Set Identifier), the RF (Radio Frequency) channel, measurement reports and/or the load of the target cell.

In a preferred embodiment the handover decision may be performed by an application server or a similar application server function hosted in the IMS architecture on the basis of access network related information received from the source cell's eMSC-server function. The application server may be configured to be responsible for anchoring sessions and executing session transfer between access networks for the session.

Advantageously, the application server discovers the target cell's eMSC-server function on the basis of the access network related information received from the source cell's eMSC-server function.

The application server may perform the handover decision either locally or by interrogating a discovery function, for example the Home Subscriber Server (HSS).

With respect to informing the target user agent of successful IMS registration anchored in the application server, it may be provided that the application server signals successful IMS registration to the target user agent by means of a response message.

Advantageously, the target user agent sends an invite message for performing session transfer of the media path to the application server, the invite message including an identifier of the session to take over.

With respect to an efficient avoidance of losses during data transmission, the invite message may include an additional flag indicating that a bi-casting of the session media towards both the source cell's eMSC-server function and the target cell's eMSC-server function is allowed. Additionally, the invite message or a re-invite message may support a max timer option for the bi-casting. The bi-casting may be stopped from source or target access by an explicit indication, e.g. in SIP signalling.

With respect to an efficient processing of the handover, the application server may update the remote access leg and may send a message acknowledging the invite message to the target cell's eMSC-server function.

Finally, the source cell's eMSC-server function, upon being informed of successful preparation of the session handover at the target cell's eMSC-server function, may release the session.

There are several ways how to design and further develop the teaching of the present invention in an advantageous way. To this end, it is to be referred to the patent claims subordinate to patent claim 1 and to the following explanation of preferred examples of embodiments of the invention, illustrated by the figures. In connection with the explanation of the preferred examples of embodiments of the invention by the aid of the figures, generally preferred embodiments and further developments of the teaching will be explained.

In the drawings:
- Fig. 1: is a schematic view of a typical network architecture illustrating an example of an application scenario for performing a handover between a femto cell and an eMSC-server,
- Fig. 2: is a schematic view of a typical network architecture illustrating an example of another application scenario for performing a handover between two eMSC-servers,
- Fig. 3: is a schematic view illustrating an embodiment of a method of supporting network based mobility according to the present invention,
- Fig. 4: is a diagram showing example call flows of the embodiment according to Fig. 3 using a HO_REQUEST message,
- Fig. 5: is a diagram showing example call flows of the embodiment according to Fig. 3 mapping the HO_REQUEST message to an existing SIP REFER message,
- Fig. 6: is a schematic view illustrating another embodiment of a method of supporting network based mobility according to the present invention,

- Fig. 7: is a diagram showing example call flows of the embodiment according to Fig. 6 for discovering the target eMSC-server by employing the application level registration, and
- Fig. 8: is a diagram showing example call flows of the embodiment according to Fig. 6 employing a NOTIFY message.

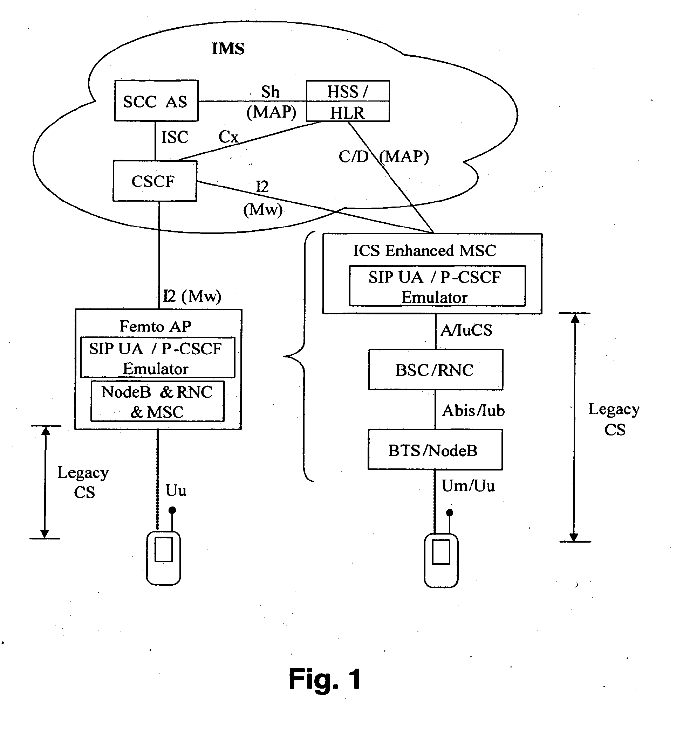

Fig. 1 shows a schematic view of a typical network architecture illustrating an example of an application scenario for performing a handover between a femto cell and an eMSC-server. Fig. 1 shows a UE which is connected via a femto access point to the IMS network which exhibits a SCC AS, a HSS and a CSCF. The femto access point exhibits a built-in MSC and hosts the source SIP user agent (SIP UA) on behalf of the user. In case of performing the handover, Fig. 1 shows the target eMSC-server which hosts the target SIP UA. After the handover, the UE is connected via the BTS (Base Transceiver System) or NodeB and BSC (Base Station Controller) or RNC (Radio Network Controller) to the target eMSC-server which is linked to the IMS architecture. The femto access point and the eMSC-server are the network elements bridging the gap between legacy CS UMTS telephone systems and Packet Switched IP IMS networks.

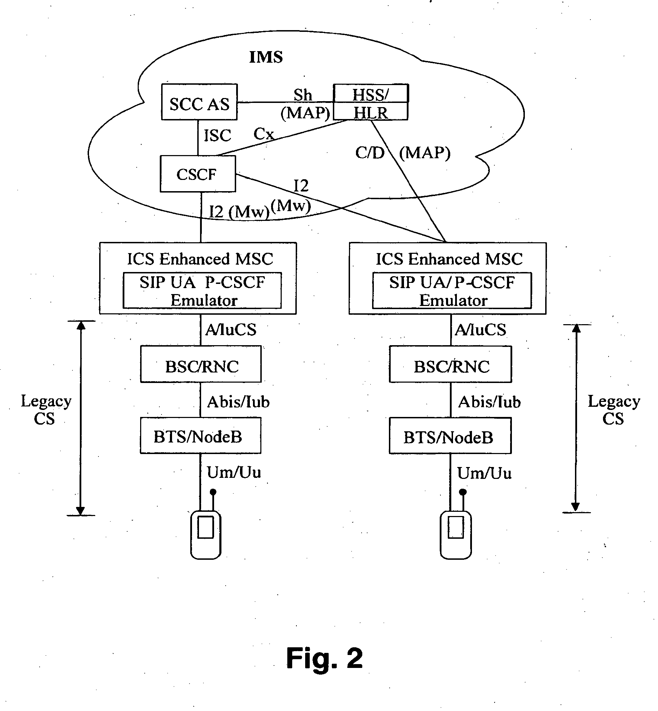

Fig. 2 shows a schematic view of a typical network architecture illustrating an example of another application scenario for performing a handover of UE. This application scenario distinguishes from the application scenario illustrated in Fig. 1 in performing a handover between two eMSC-servers. Thus, Fig. 2 shows in contrast to Fig. 1 source and target eMSC-server which are connected to the IMS network.

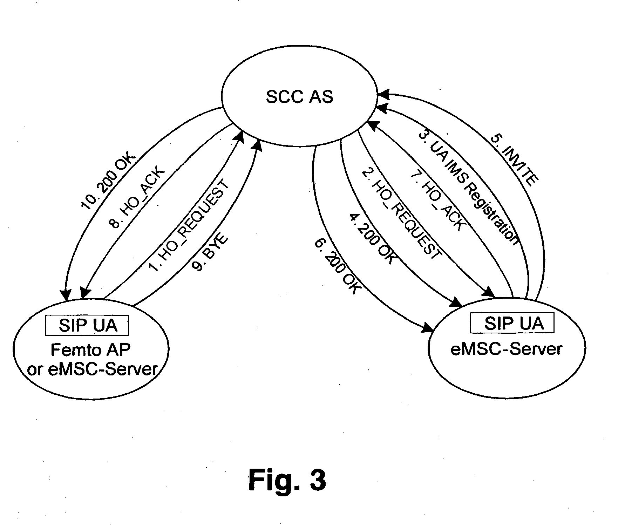

Fig. 3 shows a schematic view illustrating an embodiment of a method of supporting network based mobility according to the present invention. In particular when an IMS femto cell or an MSC-server enhanced for ICS (eMSC-server) is involved into an Inter-MSC handover, then the handover initiating entity, i.e. the IMS femto cell or the originating MSC-server enhanced for ICS includes the target cell information in the corresponding high-level, general handover request message HO_REQUEST, which could be, for example, mapped into a SIP message, e.g. a re-INVITE, REFER, or NOTIFY message.

In the solution illustrated in Fig. 3, a SCC AS (Service Continuity and Consistency Application Server) performs the handover decision and selects the target MSC-server (or femto access point) based on detailed access information (both from source and target access) - e.g. measurement report from the UE.

In case SIP-based signaling is used for the newly proposed messages, all MSC-servers enhanced with ICS must be registered by themselves. Another possibility - without using SIP - would be that the SCC AS (or a similar function) knows the IP address of the target MSC-server using DNS or any other directory service (e.g. LDAP). This is needed to send the HO_REQUEST message (which can carry the required context information from the source to the target MSC server) and to receive an ACK. The same principle can be applied between any two entities that are hosting a SIP-UA in order exchange information between the entities prior to executing the actual handover.

It is noted that the term SCC AS is used as an exemplary application server which could take over the responsibility/function described. This function could also be provided by another (new) application server or another (new) functional entity, which are specifically implemented in the network.

In the following the single steps of the exemplary embodiment illustrated in Fig. 3 are described in some more detail. In a first step (1) the source femto access point/eMSC-server sends a HO_REQUEST to the SCC AS or a similar application server. Within this handover request, information about the session to be transferred and the originating user as well as target access and/or target network related information (e.g. target cell ID, target RAT type, SSID, RF channel, etc.) is provided.

The SCC AS decides based on the information on the information obtained in step (1), which MSC-server (or Femto access point) will be the target for the session. The SCC AS sends the HO_REQUEST message towards the selected MSC-server (2). SCC AS also performs the handover decision - detailed access information (both from source and target access) can be taken into account (e.g. measurement report from UE)

In step (3) the MSC-server processes the handover request, downloads the user profile of the subscriber - e.g. from the Home Location Register (HLR) - and registers the subscriber at IMS (or the SIP/SIP-like Server anchoring the session control) on behalf of the user. The target MSC-server may also need to derives the public user ID from the IMSI (International Mobile Subscriber Identity) used for IMS registration of the SIP UA. If necessary, the MSC-server will also request the required resources in the Radio Access Network (RAN) towards the target cell or simply prepare the access network.

After successful IMS/SIP registration, anchored in the SCC AS (or similar AS function), the SCC AS sends a 200 OK to the SIP UA on the MSC-server (4).

Subsequently the user agent is ready to take over the session and sends in step (5) an INVITE with a reference to the session ID of the session to take over. Within this step (5) also an additional flag could be inserted to indicate that bi-casting of the media towards the femto access point and the eMSC-server should start.

In a next step, the SCC AS updates the remote leg and acknowledges the INVITE (6). Subsequently the target MSC-server (or femto access point) then sends a handover acknowledgement towards the SCC AS (7). The SCC AS forwards the HO_ACK message to the source femto access point/eMSC-server (8).

The source femto access point/eMSC-server now knows that the handover is prepared at the target eMSC/femto access point, releases the session, and sends a BYE to the SCC AS (9). This BYE message stops the bi-casting potentially initiated in step (5). At this point, the source femto access point/eMSC-server will also send or trigger the sending of a handover command message towards the UE, to indicate that the handover should take place now. Finally the SCC AS acknowledges the BYE with a 200 OK.

Alternatively, instead of switching the data path towards the target eMSC-server (or femto access point) in step 5, the path switch could also be triggered by step 9 (i.e. when the source femto access point/eMSC-server deregisters).

Furthermore all MSC-servers enhanced for ICS within the network register in IMS with their contact address, which is also provided to the SCC AS, i.e. the SIP control signaling is anchored there. The SCC AS provides the address of the responsible target MSC-server enhanced for ICS, this could be done e.g. by a database lookup of all registered MSC-servers. The IMS femto cell knows the target cell ID, as it got communicated by the measurement reports of the UE to the femto cell, which makes then the handover decision.

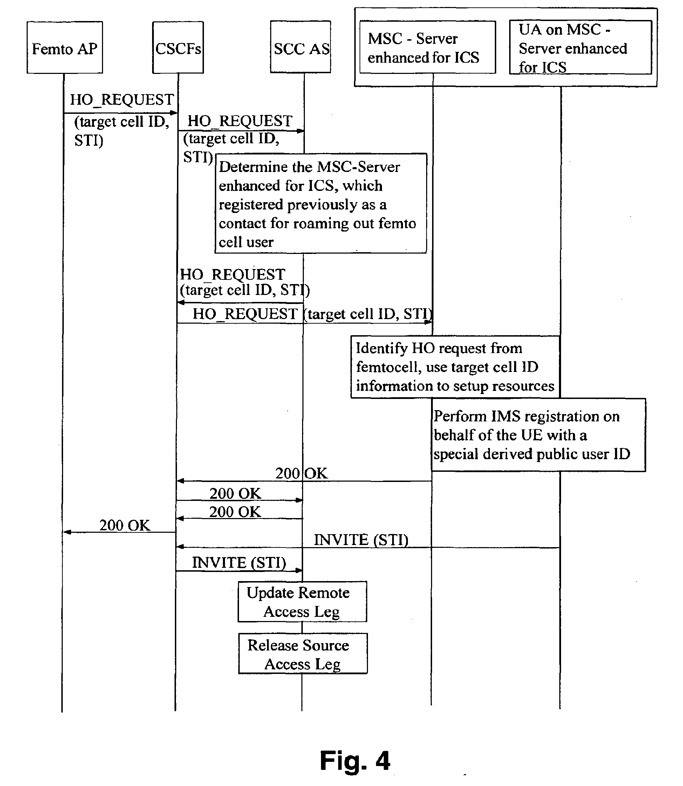

Fig. 4 illustrates a diagram showing call flows of an embodiment according to Fig. 3 using a HO_REQUEST message. The femto cell initiates a handover request with the target cell ID and the Session Transfer ID via the CSCFs (Call Session Control Functions) to the SCC AS. The SCC AS maintains a database to select the corresponding contact address of the responsible MSC-server enhanced for ICS. The SCC AS selects the appropriate MSC-server enhanced for ICS and forwards the handover request. Once the MSC-server enhanced for ICS receives the handover request message, it starts setting up resources towards the target cell and initiates IMS registration on behalf of the UE with the special derived public user ID. The MSC-server further initiates the session transfer sending an INVITE message towards the SCC AS. This INVITE message is targeted to the Session Transfer Identifier (STI) identifying the session to be transferred. The INVITE message also indicates the SCC AS to perform Access Transfer with full media transfer.The SCC AS identifies the session based on STI and updates the session over the remote access leg. The SCC AS completes session setup with the MSC-server enhanced for ICS on the new access leg and releases the old session based on standard IMS procedures.

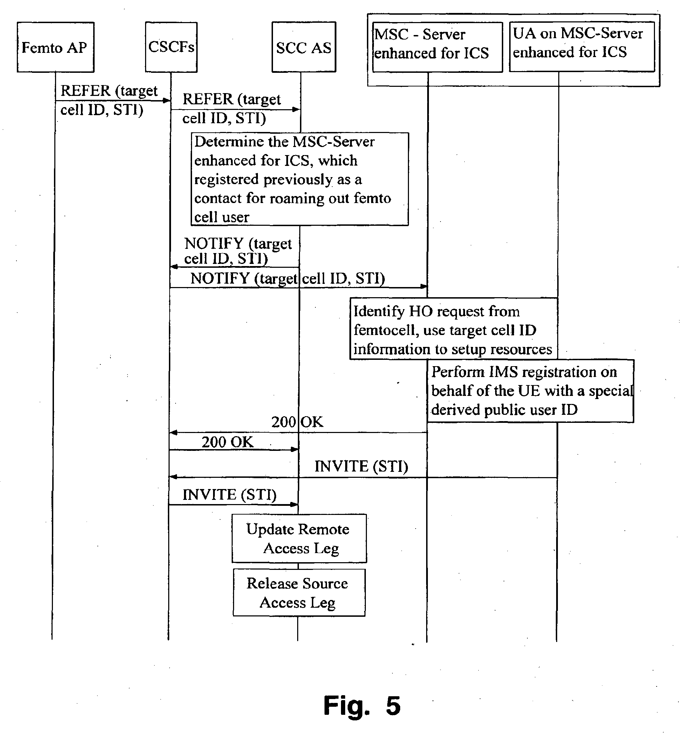

Fig. 5 illustrates a diagram showing call flows of an embodiment according to Fig. 3 mapping the HO_REQUEST message to an existing SIP REFER message. The femto access point sends a REFER towards the target cell id. After the processing in the SCC AS, it will send a NOTIFY with all information to the registered eMSC-server instance. This triggers the IMS registration on behalf of the user with a special derived public user id. The eMSC-server instance acknowledges the NOTIFY and triggers the now registered user agent to send an INVITE with the STI information towards the SCC AS, which will update the remote access leg and release the source leg afterwards.

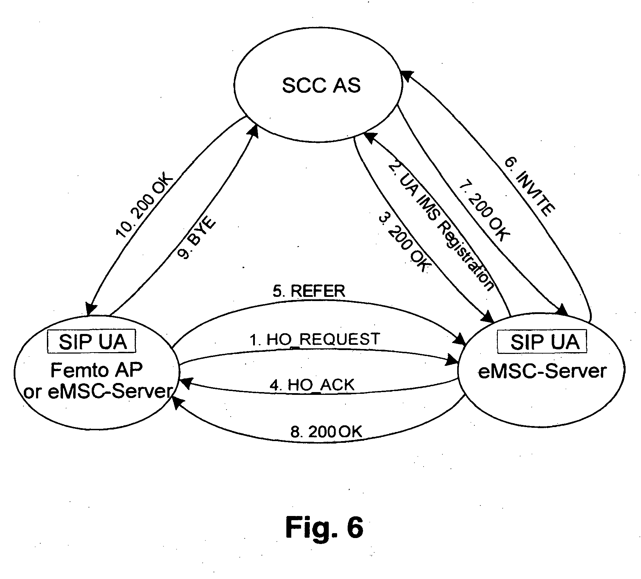

Fig. 6 shows a schematic view illustrating another embodiment of a method of supporting network based mobility according to the present invention, This second solution is that the source femto access point/eMSC-server will communicate "directly" with the target eMSC-server (or femto access point) without going though the SCC AS (or a similar application server function). To enable this, the source node, needs to somehow obtain a routable identity of the target node. As a consequence the source femto access point/eMSC-server will perform an explicit or implicit lookup of the target MSC (or femto access point) address prior to the HO_REQUEST message. The source femto access point/eMSC-server may for example inquire the SCC AS (or a similar AS function) or a dedicated discovery/lookup function to obtain the target MSC-server (or femto access point).

Another possibility is that when the source femto access point registers in the IMS, then the SCC AS determines the responsible eMSC-server for potential macro handover. This eMSC-server address is then provided back to the femto access point e.g. within the 200 OK message.

Another possibility would be that the source femto access point/eMSC-server based on the information obtained by the access network (e.g. measurement report, target Cell ID, SSID, etc.) derives a IMS-routable SIP identifier/name, which allows the source node to directly address the target node. In this case, IMS takes care of the routing of the HO_REQUEST messages (i.e. every femto access point/eMSC-server will be IMS registered for control purposes).

Finally, there can also be solutions that do no rely on SIP. For example, the source femto access point/eMSC-server could use Diameter/Radius, DNS or any other directory service (e.g. LDAP) to obtain the address of the target eMSC-server (or femto access point). Like in SIP, in case of Diameter the source femto access point/eMSC-server can also masquerate relevant information in the Diameter destination identifier and then allow the Diameter routing function to do the final selection.

In this second solution, the handover decision is taken by the source femto access point/eMSC-server based on detailed access information (both from source and target access) - e.g. measurement report from UE.

Thus, Fig. 6 must be extended as follows. Inserting two optional steps before the first steps called (a) HO_TARGET_LOOKUP and (b) HO_TARGET_RESPONSE. These steps are optional because they are only executed in case of explicit lookup mechanism. For implicit lookups (e.g. based on configuration in source entity or based on SIP/IMS or DIAMETER routing) these steps would not be needed.

In the following the single steps of the exemplary embodiment illustrated in Fig. 6 are described in some more detail. In a first step (1) the femto access point sends a HO_REQUEST directly to the MSC-server. Within this request, information about the session to be transferred and the originating user as well as the target cell ID is provided.

The MSC-server processes the handover request, downloads the user profile of the subscriber from the HLR into the VLR and derives the public user ID from the IMSI used for IMS registration of the SIP UA. The SIP UA sends then a IMS register message on behalf of the user (2). The MSC-server also requests resources in the RAN for the target cell ID.

After successful IMS registration, anchored in the SCC AS, the SCC AS sends a 200 OK to the SIP UA on the MSC-server (3). The MSC-server then sends in step (4) a handover acknowledgement towards the femto access point with the SIP UA address information.

Subsequently, the femto access point sends a REFER to the SIP UA on the MSC-server to take over the active session (5). The MSC-server processes the REFER and sends an INVITE with a refer to the SCC AS (6). Within this step also an additional flag could be inserted to indicate that bi-casting of the media towards the femto access point and the eMSC-server should start.

In step (7), the SCC AS updates the remote leg and acknowledges the INVITE with a 200 OK. The MSC-server acknowledges the REFER to the femto access point with a 200 OK (8). The femto access point now knows that the handover is prepared at the MSC-server and release the session and sends a BYE to the SCC AS (9). This BYE message stops the potential bi-casting, initiated in step (6). Finally in step (6), the SCC AS acknowledges the BYE with a 200 OK.

Alternatively, instead of switching the data path towards the target eMSC-server (or femto access point) in step (6), the path switch could also be triggered by step (9), i.e. when the source femto access point/eMSC-server deregisters.

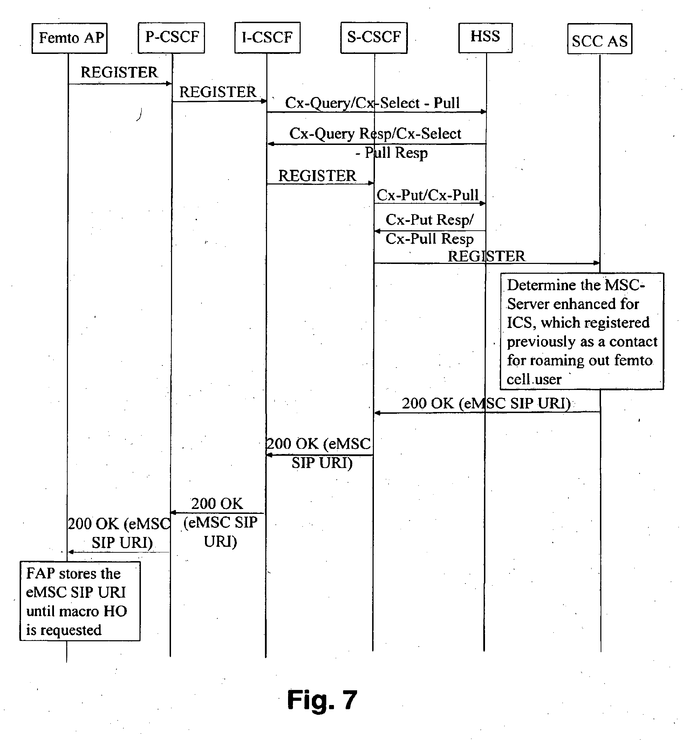

Fig. 7 illustrates a diagram showing example call flows of an embodiment according to Fig. 6 for discovering the target eMSC-server by employing the application level registration. After the UE has obtained IP connectivity, the UE performs the IM registration by sending a register message to the P-CSCF (Proxy Call Session Control Function). The P-CSCF sends the register message to the I-CSCF (Interrogating CSCF) which sends a Cx-Query/Cx-Select-Pull message to the HSS. The HSS checks whether the user is registered already. The HSS indicates whether the user is allowed to register in that P-CSCF network according to the user subscription and operator limitations/restrictions if any. A Cx-Query Resp/Cx-Select-Pull Resp containing the S-CSCF name is sent from the HSS to the I-CSCF. Thus, the I-CSCF can send the register message to the selected S-CSCF. The S-CSCF sends a Cx-Put/Cx-Pull to the HSS. The HSS stores the S-CSCF name for that user and returns user information by employing the Cx-Put Resp/Cx-Pull Resp to the S-CSCF. Thereupon the S-CSCF sends a register message to SCC AS for determining the eMSC-server which registered previously as a contact for roaming out femto cell user. The SCC AS sends a 200 OK message which includes the eMSC SIP URI of the target eMSC-server via the CSCFs to the femto access point. Thus, after discovering the target eMSC-server, the femto cell just needs to store the address for the case a macrocell handover is considered to be necessary.

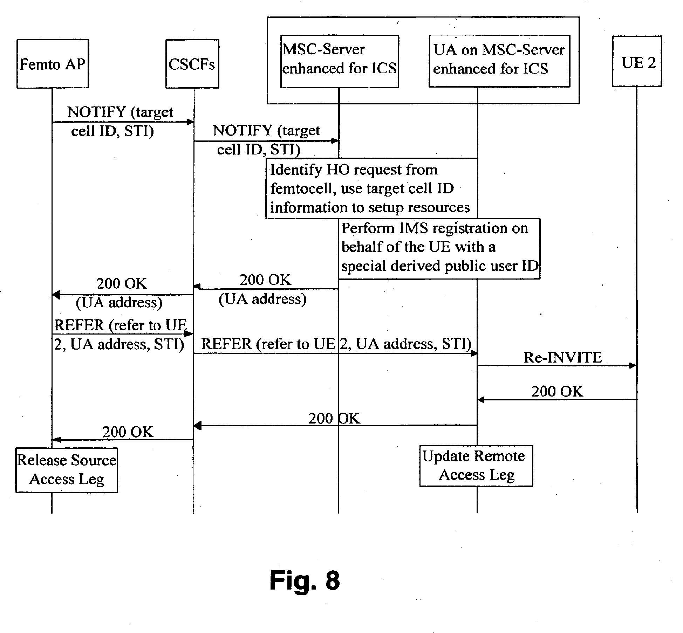

Fig. 8 illustrates a diagram showing example call flows of an embodiment according to Fig. 6. If the measurement reports are evaluated and the femto cell decides to perform a handover to the eMSC-server, then the femto cell sends a NOTIFY message via the CSCFs to the stored eMSC-server address. This NOTIFY message additionally contains the target cell ID and the session transfer identifier (STI) for the session to be transferred. The eMSC-server identifies the handover request based on the NOTIFY message and the SIP UA on the eMSC-server registers to IMS on behalf of the UE with a special derived public user ID. After the successful registration the MSC-server acknowledges the NOTIFY with a 200 OK and the registered SIP UA address. The FAP now knows that the SIP UA is registered and sends directly to the SIP UA on the eMSC-server a REFER with the target UE2 in the Uniform Resource Identifier (URI). Additionally the STI information is provided. The SIP UA on the eMSC-server then sends a Re-INVITE to the UE2. After the UE2 sends back the 200 OK, the SIP UA on the MSC-server could update the remote access leg directly or wait until a timer is expired when it is assumed the source leg has been released. The femto cell releases the source access leg when it receives the 200 OK answer related to the REFER message.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting network based mobility for a mobile terminal in an, IMS, IP Multimedia Subsystem architecture,
wherein said mobile terminal is connected to a femto cell or to a macro cell - source cell - and wherein a handover of an actual session of said mobile terminal is performed to another femto cell or macro cell - target cell -,
wherein said femto cells and said macro cells are equipped with or are connected to an, eMSC-server, Mobile Switching Center Server enhanced for IMS Centralized Services function, and
wherein said source cell's eMSC-server function hosts a source user agent and said target cell's eMSC-server function hosts a target user agent, and
wherein said source user agent contacts said target user agent directly or indirectly prior to executing the actual handover, and wherein said source user agent prepares said target user agent together with the corresponding access network by exchanging handover related information,
**characterized in that** said target cell's eMSC-server function, upon receiving handover request from an application server hosted in said IMS architecture or from said source cell's eMSC-server function, processes said handover request by downloading the user profile of the subscriber of said mobile terminal and registering said subscriber at IMS.

2. Method according to claim 1, wherein a handover decision is performed by said application server on the basis of information regarding the access network of said target cell received from said source cell's eMSC-server function.

3. Method according to claim 2, wherein said application server discovers said target cell's eMSC-server function on the basis of said access network related information received from said source cell's eMSC-server function.

4. Method according to any of claims 1 to 3, wherein said application server performs said handover decision locally.

5. Method according to any of claims 1 to 4, wherein said application server performs said handover decision by interrogating a discovery function.

6. Method according to any of claims 1 to 5, wherein said application server signals successful IMS registration to said target user agent by means of a response message.

7. Method according to claim 6, wherein said target user agent sends an invite message for performing session transfer of the media path to said application server, said invite message including an identifier of the session to take over.

8. Method according to claim 7, wherein said invite message includes an additional flag indicating that a bi-casting of said session media towards both said source cell's eMSC-server function and said target cell's eMSC-server function is allowed.

9. Method according to claim 7 or 8, wherein said application server updates the remote access leg and sends a message acknowledging said invite message to said target cell's eMSC-server function.

10. Method according to any of claims 7 to 9, wherein said source cell's eMSC-server function, upon being informed of successful preparation of said session handover at the target cell's eMSC-server function, releases said session.

## Patentansprüche

1. Verfahren zur Unterstützung netzwerkbasierender Mobilität für ein mobiles Endgerät in einer, IMS, IP Multimedia Subsystem Architektur,
wobei das mobile Endgerät mit einer Femtozelle oder mit einer Makrozelle - Quellzelle - verbunden ist und wobei ein Handover einer gegenwärtigen Sitzung des mobilen Endgeräts zu einer anderen Femtozelle oder Makrozelle - Zielzelle - durchgeführt wird,
wobei die Femtozellen und die Makrozellen mit einer, eMSC-Server, Mobile Switching Center Server enhanced for IMS Centralized Services Funktion ausgerüstet oder verbunden sind, und
wobei die eMSC-Server Funktion der Quellzelle einen Quell-User-Agent hostet und die eMSC-Server Funktion der Zielzelle einen Ziel-User-Agent hostet, und
wobei der Quell-User-Agent den Ziel-User-Agent vor Ausführung des tatsächlichen Handovers direkt oder indirekt kontaktiert, und wobei der Quell-User-Agent den Ziel-User-Agent zusammen mit dem entsprechenden Zugangsnetz durch Austauschen von Handover bezogenen Informationen vorbereitet,
**dadurch gekennzeichnet, dass** die eMSC-Server Funktion der Zielzelle, nach Empfangen eines Handover Requests von einem in der IMS Architektur gehosteten Anwendungsserver oder von der eMSC-Server Funktion der Quellzelle, den Handover Request verarbeitet durch Herunterladen des User-Profils des Teilnehmers des mobilen Endgeräts und Registrieren des Teilnehmers im IMS.

2. Verfahren nach Anspruch 1, wobei eine Handoverentscheidung von dem Anwendungsserver durchgeführt wird auf Basis von Informationen betreffend das Zugangsnetz der Zielzelle, die von der eMSC-Server Funktion der Quellzelle empfangen werden.

3. Verfahren nach Anspruch 2, wobei der Anwendungsserver die eMSC-Server Funktion der Zielzelle entdeckt auf Basis von in Zusammenhang mit dem Zugangsnetz stehenden Informationen, die von der eMSC-Server Funktion der Quellzelle empfangen werden.

4. Verfahren nach einem der Ansprüche 1 bis 3, wobei der Anwendungsserver die Handoverentscheidung lokal durchführt.

5. Verfahren nach einem der Ansprüche 1 bis 4, wobei der Anwendungsserver die Handoverentscheidung durch Abfragen einer Discovery-Funktion durchführt.

6. Verfahren nach einem der Ansprüche 1 bis 5, wobei der Anwendungsserver eine erfolgreiche IMS Registrierung dem Ziel-User-Agent mittels einer Antwort-Nachricht signalisiert.

7. Verfahren nach Anspruch 6, wobei der Ziel-User-Agent eine Invite-Nachricht zur Durchführung einer Sitzungsübergabe des Medienwegs an den Anwendungsserver sendet, wobei die Invite-Nachricht eine Kennung der Sitzung zum Übernehmen umfasst.

8. Verfahren nach Anspruch 7, wobei die Invite-Nachricht ein zusätzliches Flag umfasst, das anzeigt, dass ein Bi-Casting der Sitzungsmedia sowohl in Richtung der eMSC-Server Funktion der Quellzelle als auch in Richtung der eMSC-Server Funktion der Zielzelle gestattet ist.

9. Verfahren nach Anspruch 7 oder 8, wobei der Anwendungsserver den Remote Access Leg aktualisiert und eine Nachricht zum Bestätigen der Invite-Nachricht an die eMSC-Server Funktion der Zielzelle sendet.

10. Verfahren nach einem der Ansprüche 7 bis 9, wobei die eMSC-Server Funktion der Quellzelle, nach Informierung über eine erfolgreiche Vorbereitung des Sitzungshandovers in der eMSC-Server Funktion der Zielzelle, die Sitzung freigibt.

## Revendications

1. Procédé de prise en charge de la mobilité basée sur le réseau pour un terminal mobile dans une architecture de sous-système multimédia IP, IMS,
dans lequel ledit terminal mobile est connecté à une femtocellule ou à une macrocellule - la cellule source - et dans lequel un transfert intercellulaire d'une session en cours dudit terminal mobile est mis en oeuvre vers une autre femtocellule ou macrocellule - la cellule cible - ;
dans lequel lesdites femtocellules et lesdites macrocellules sont équipées d'une, ou sont connectées à une fonction de serveur de centre de commutation du service mobile amélioré, serveur de centre eMSC, pour des services centralisés de sous-système IMS ; et
dans lequel ladite fonction de serveur de centre eMSC de la cellule source héberge un agent utilisateur source et ladite fonction de serveur de centre eMSC de la cellule cible héberge un agent utilisateur cible ; et
dans lequel ledit agent utilisateur source contacte ledit agent utilisateur cible, directement ou indirectement, avant l'exécution du transfert intercellulaire effectif, et dans lequel ledit agent utilisateur source prépare ledit agent utilisateur cible, conjointement avec le réseau d'accès correspondant, en échangeant des informations connexes au transfert intercellulaire ;
**caractérisé en ce que** ladite fonction de serveur de centre eMSC de la cellule cible, suite à la réception d'une demande de transfert intercellulaire en provenance d'un serveur d'applications hébergé dans ladite architecture de sous-système IMS ou en provenance de ladite fonction de serveur de centre eMSC de la cellule source, traite ladite demande de transfert intercellulaire en téléchargeant le profil d'utilisateur de l'abonné dudit terminal mobile et en enregistrant ledit abonné auprès du sous-système IMS.

2. Procédé selon la revendication 1, dans lequel une décision de transfert intercellulaire est mise en oeuvre par ledit serveur d'applications sur la base d'informations concernant le réseau d'accès de ladite cellule cible, reçues à partir de ladite fonction de serveur de centre eMSC de la cellule source.

3. Procédé selon la revendication 2, dans lequel ledit serveur d'applications découvre ladite fonction de serveur de centre eMSC de la cellule cible sur la base desdites informations connexes au réseau d'accès reçues à partir de ladite fonction de serveur de centre eMSC de la cellule source.

4. Procédé selon l'une quelconque des revendications 1 à 3, dans lequel ledit serveur d'applications met en oeuvre ladite décision de transfert intercellulaire localement.

5. Procédé selon l'une quelconque des revendications 1 à 4, dans lequel ledit serveur d'applications met en oeuvre ladite décision de transfert intercellulaire en interrogeant une fonction de découverte.

6. Procédé selon l'une quelconque des revendications 1 à 5, dans lequel ledit serveur d'applications signale un enregistrement réussi de sous-système IMS audit agent utilisateur cible au moyen d'un message de réponse.

7. Procédé selon la revendication 6, dans lequel ledit agent utilisateur cible envoie un message d'invite visant à mettre en oeuvre un transfert de session du chemin de support audit serveur d'applications, ledit message d'invite comprenant un identifiant de la session à adopter.

8. Procédé selon la revendication 7, dans lequel ledit message d'invite inclut un drapeau supplémentaire indiquant qu'une double diffusion dudit support de session à la fois vers ladite fonction de serveur de centre eMSC de la cellule source et vers ladite fonction de serveur de centre eMSC de la cellule cible est autorisée.

9. Procédé selon la revendication 7 ou 8, dans lequel ledit serveur d'applications met à jour le tronçon d'accès distant et envoie un message accusant réception dudit message d'invite à ladite fonction de serveur de centre eMSC de la cellule cible.

10. Procédé selon l'une quelconque des revendications 7 à 9, dans lequel ladite fonction de serveur de centre eMSC de la cellule source, après avoir été informée de la préparation réussie dudit transfert intercellulaire de session au niveau de la fonction de serveur de centre eMSC de la cellule cible, libère ladite session.
